# EUROPÄISCHE PATENTSCHRIFT

(11) **EP 2 861 305 B1**
(45) Veröffentlichungstag und Bekanntmachung des Hinweises auf die Patenterteilung: **19.08.2020**
(21) Anmeldenummer: 13737790.9
(22) Anmeldetag: 10.06.2013
(51) Int. Cl.: A62C 2/06, A62C 3/08, A62C 3/07, E04B 2/74

(54) **INNENVERKLEIDUNG FÜR TRANSPORTMITTEL MIT EINEM BRANDSCHUTZLACK**
INTERIOR COVERING PANELS FOR MEANS OF TRANSPORATION WITH A FIRE-RESISTING PAINT
GARNITURE INTÉRIEURE POUR MOYEN DE TRANSPORT, POURVUE D'UNE PEINTURE DE PROTECTION CONTRE LE FEU

(30) Priorität: 14.06.2012 DE 102012011677
(43) Veröffentlichungstag der Anmeldung: 22.04.2015
(73) Patentinhaber: Elbe Flugzeugwerke GmbH, 01109 Dresden (DE)
(72) Erfinder: HÖRICH, Frank, 01109 Dresden (DE); HERTEL, Martin, 01458 Ottendorf-Okrilla (DE); KNORR, Alexander, 01640 Coswig (DE)
(74) Vertreter: LKGLOBAL Lorenz & Kopf PartG mbB Patentanwälte
(86) Internationale Anmeldenummer: PCT/DE2013/000312
(87) Internationale Veröffentlichungsnummer: WO 2013/185746

(56) Entgegenhaltungen:
- DE-A1-102010 038 823
- US-A- 4 027 444
- US-A1- 2001 018 817
- US-A1- 2002 100 404

## Beschreibung

Die Erfindung betrifft eine Innenverkleidung von Personen- und Gütertransportmitteln mit Innenverkleidungsplatten mit umlaufenden Kanten, mit Koppelungsstellen der Innenverkleidungsplatten untereinander oder an einer Sekundärstruktur, mit flächigen Verbindungselementen an den Koppelungsstellen, mit Befestigungselementen zur Befestigung der Verbindungselemente zumindest an den Innenverkleidungsplatten oder der Sekundärstruktur und mit Dichtmitteln in einem Spalt zwischen der Innenverkleidungsplatte und dem Verbindungselement.

Intumeszierend bzw. Intumeszenz bezeichnet die Wirkungsweise. bestimmter Materialien, sich bei einer Grenztemperatur bzw. im Brandfall auf ein Vielfaches ihres Ursprungsvolumens auszudehnen bzw. aufzuschäumen. Dadurch. bilden sie eine flächige, wärmedämmende und flammwidrige Schutzschicht, z. B. in Form eines Hartschaums. Intumeszierende Materialien werden daher auch als Dämmschichtbildner bezeichnet. Beim Aufschäumen erzeugen sie einen Expansionsdruck, so dass sie Fugen, Spalte, Stoßstellen und andere Öffnungen vollständig ausfüllen.

Innenverkleidungen von Transportmitteln als Primärstruktur dienen regelmäßig der Verkleidung einer Sekundärstruktur, beispielsweise einer Tragestruktur oder einer Karosserie bzw. Chassis und damit jedenfalls optischen Zwecken. Sie sind in Gütertransportmitteln, erst recht aber in Personentransportmitteln wie beispielsweise Schienen- oder Luftfahrzeugen, bekannt und gebräuchlich. Innenverkleidungen umfassen Verkleidungs- oder Innenausbauplatten. die als Boden-, Trennwand-, Seitenwand-, Einhausungs-, Abdeckungs-, Decken- oder Treppenplatten vorkommen. Je nach Einsatzzweck variiert ihr konstruktiver Aufbau jedenfalls hinsichtlich der Abmessungen. Aus Gewichts- und Stabilitätsgründen sind Innenverkleidungsplatten häufig Laminatbauteile aus faserverstärkten Kunststoffen, so genannte Stützkernverbund- oder Sandwichplatten. An ihren sie umgrenzenden umlaufenden Kanten weisen sie Koppelungsbereiche bzw. -stellen auf, an denen die Innenverkleidungsplatten untereinander oder an einer Sekundärstruktur befestigt sind. Dafür kommen regelmäßig flächige Verbindungselemente zum Einsatz, die eine Fuge zwischen den Innenverkleidungsplatten überbrücken bzw. abdecken.

Häufig ermöglichen sie zusammen mit Befestigungselementen, im einfachsten Falle aus Schrauben und Muttern, ein gewisses Spiel bzw. eine Relativbewegung zwischen den Innenverkleidungsplatten untereinander oder gegenüber der Sekundärstruktur. Die Befestigungselemente befestigen die Innenverkleidungsplatten an den Verbindungselementen oder direkt an der Sekundärstruktur. In dem Kontaktspalt zwischen so gut wie jeder Innenverkleidungsplatte und einem Verbindungselement ist außerdem ein Dichtmittel gegen Luftaustausch und Feuchtigkeit angebracht. Dafür wird regelmäßig ein elastisches Dichtband oder ein elastischer Dichtstreifen an den Koppelungsstellen bzw. den Kanten der Innenverkleidungsplatten aufgeklebt. Die Dichtbänder widerstehen im Regelfall auch einer Beflammung, so dass sie zugleich auch einen gewissen Brandschutz darstellen.

Die DE 10 2010 019 382 zeigt ein thermisches Isolierband mit Brandschutzfunktion für den Flugzeugbau mit mehrschichtigem Aufbau. Es umfasst ein flexibles Trägerband aus einem durchbrandschützenden Material, das einseitig mit einem Klebefilm zum vollständigen Umwickeln oder partiellen Anbringen an einem zu schützenden Bauteil versehen ist. Das Trägerband ist als wärmeleitfähiges Metallband ausgebildet, auf dessen einer Seite der Klebefilm aufgebracht ist, wohingegen dessen andere Seite mit einer flexiblen, intumeszierenden Beschichtung versehen ist.

US 4,027,444 beschreibt feuerhemmende Wände für die Verwendung in Schiffen. Die feuerhemmenden Wände weisen mehrere Platten auf, die aus jeweils zwei Paneelen und zumindest einer feuerhemmenden Schicht zwischen den Paneelen bestehen. Die Ecken der einzelnen Elemente sind mit einer Beschichtung versehen, welche schäumt, wenn sie Hitze ausgesetzt ist.

US 2002/0100404 A1 beschreibt eine Feuerschutztrennwand für ein Fahrzeug. Die Trennwand weist eine innere Feuerschutzschicht auf, mit daran angrenzenden äußeren Metallschichten sowie äußeren Isolationsschichten mit einem intumeszierenden Glasfasergewebe, welches sich auf den Metallschichten befindet.

DE 10 2010 038 823 A1 beschreibt eine Verkleidungsanordnung für einen Frachtraum eines Luft- oder Raumfahrzeugs mit einem ersten und einem zweiten Paneel, welche einen Spalt zwischen sich ausbilden; einem ersten Halterungsteil zum Anbringen an einer Primärstruktur des Frachtraums, welches wenigstens ein Rastmittel aufweist; und einem zweiten Halterungsteil, welches wenigstens ein Gegenrastmittel aufweist; wobei das Rastmittel und/oder das Gegenrastmittel wenigstens abschnittsweise durch den Spalt zwischen dem ersten und dem zweiten Paneel hindurchreicht; und wobei das Rastmittel und das Gegenrastmittel miteinander verrastet sind, um das erste Halterungsteil mit dem zweiten Halterungsteil für ein Halten des ersten und zweiten Paneels zwischen dem ersten Halterungsteil und dem zweiten Halterungsteil zu verbinden.

Aufgabe der Erfindung ist es, die Brandschutzsicherheit von Innenverkleidungen einfacher und kostengünstiger zu gestalten.

Diese Aufgabe wird bei der eingangs genannten Innenverkleidung erfindungsgemäß durch die Anordnung einer intumeszierenden Beschichtung im Bereich der Koppelungsstelle gelöst, die so angeordnet ist, dass sie im Brandfall den Spalt dichtend ausfüllt und als Lack ausgebildet ist. Ein im Montagezustand flüssiger Lack lässt sich vorteilhaft auftragen, weil er durch Streichen, Rollen, Spritzen oder durch Eintauchen eines Bauteils in den frischen Lack appliziert werden kann. Alle diese Applikationsmethoden können grundsätzlich von Hand durchgeführt werden, so dass sie weitgehend uneingeschränkt einsetzbar sind. Sie lassen sich jedoch auch mechanisieren, so dass eine fehleranfällige und aufwändige händische Montage von Dichtstreifen oder Isolierbändern entfallen kann. Die Erfindung wendet sich damit davon ab, eine Funktionenkombination aus einer elastischen Luft- und Feuchtigkeitsdichtung einerseits und einer Brandschutzdichtung andererseits vorzunehmen, die die Herstellung des Dichtstreifens aufwändig macht und ein Fehler in der Montage gleich mehrere Dichtfunktionen beeinträchtigt. Sie verfolgt vielmehr das Prinzip einer Funktionentrennung, wonach die Funktion der Luft- und Feuchtigkeitsdichtung einerseits und diejenige des Brandschutzes andererseits in separaten Bauteilen verkörpert sind. Dies hat den entscheidenden Vorteil, dass ein Montagefehler im Bereich beispielsweise eines elastischen Dichtstreifens gegen Luft- und Feuchtigkeitsdurchtritt keine Gefährdung des Brandschutzes darstellt. Dadurch kann die Qualität des Brandschutzes erhöht werden. Der Brandschutzlack ist in der Nähe des Dichtstreifens bzw. des abzudichtenden Spalts anzubringen, damit er unter Hitzeeinwirkung den Spalt durch sein Aufschäumen weitgehend durchbrandsicher verschließt. Erfindungsgemäß ist der intumeszierende Lack an den Kanten der Innenverkleidungsplatten angebracht.

Eine weitere Steigerung der Brandschutzqualität lässt sich dadurch erreichen, dass intumeszierender Brandschutz, also unter Hitzeeinwirkung aufschäumendes und dadurch durchbrandschützendes Material, als Lack aufgebracht ist. Das Aufbringen des intumeszierenden Lacks kann mechanisiert werden und unterliegt damit nicht mehr der Fehleranfälligkeit einer händischen Montage. Die Funktionentrennung hat schließlich den Vorteil, dass die jeweiligen Dichtelemente, also das Dichtband gegen Luft- und Feuchtigkeitsdurchtritt einerseits und der intumeszierende Brandschutzlack andererseits, unabhängig voneinander auf ihren jeweiligen Bedarf hin konstruiert und montiert werden können. Dadurch können Montageerleichterungen und/oder Materialeinsparungen erreicht werden.

Bislang wurden die Dichtmittel zu Brandschutzzwecken im selben räumlichen Umfang aufgebracht wie diejenigen gegen Feuchtigkeits- und Luftdurchtritt. Erfindungsgemäß ist der intumeszierende Lack vollflächig oder teilflächig an den Kanten der Innenverkleidungsplatten angebracht. Dies ermöglicht eine weitgehend herkömmliche Montage sowohl der Innenverkleidungsplatten an sich als auch der Dichtmittel. Mit dem Aufbringen des intumeszierenden Lacks an den Innenverkleidungsplatten ist folglich keine wesentliche Änderung gegenüber einer herkömmlichen Montage von Dichtbändern bzw. sonstigen Dichtmitteln erforderlich. Damit kann eine weitgehend problemlose Umstellung auf eine neue Montage- bzw. Brandschutztechnologie erreicht werden.

Nach einer vorteilhaften Weiterbildung der Erfindung kann die Beschichtungsbreite des intumeszierenden Lacks weitgehend entsprechend der Kantenbreite in einer Richtung orthogonal zur Erstreckungsebene der Innenverkleidungsplatte betrachtet ausgebildet sein. Damit ist die vollständige Kantenfläche beschichtet. Es kann auch um die Kanten herum in die Plattenebene hinein beschichtet werden.

Nach einer weiteren vorteilhaften Ausgestaltung der Erfindung kann der intumeszierende Brandschutzlack zugleich eine Kantenversiegelung der Kanten der Innenverkleidungsplatten darstellen. Damit lässt sich also eine Funktionenkombination aus Kantenversiegelung einerseits und Brandschutzversiegelung andererseits erreichen.

Herkömmliche Brandschutzdichtungen werden regelmäßig im Bereich der Kanten der Innenverkleidungsplatten aufgebracht, um im Brandfall einen Zwischenraum zwischen den Innenverkleidungsplatten oder zwischen ihnen und den Verbindungselementen auszufüllen und abzudichten. Nach einer weiteren vorteilhaften Ausgestaltung der Erfindung kann der intumeszierende Brandschutzlack ausschließlich oder zusätzlich auf den Verbindungselementen aufgebracht sein. Da die Verbindungselemente sich linear bzw. flächig entlang des Spalts zwischen zwei Innenverkleidungsplatten oder einer Innenverkleidungsplatte und einer Sekundärstruktur erstrecken, können auch sie Träger des intumeszierenden Lacks sein. Damit kann sich die Behandlung der vergleichsweise sperrigen Innenverkleidungsplatte zumindest vereinfachen, wenn nicht sogar erübrigen. Die in ihren Abmessungen deutlich handlicheren Verbindungselemente dagegen können bequemer mit dem intumeszierenden Brandschutzlack versehen werden, wobei dessen Funktion und Wirkung vollständig aufrechterhalten bleibt. Auch die Montage erleichtert sich dadurch, weil nicht mehr die sperrigen Innenverkleidungsplatten besonders vorsichtig gegen Beschädigung des Brandschutzlacks gehandhabt werden müssen, sondern die demgegenüber kleineren und daher wesentlich leichter zu handhabenden Verbindungselemente.

Nach einer weiteren vorteilhaften Ausgestaltung der Erfindung kann das Verbindungselement profiliert und mit Vertiefungen ausgestattet sein, in denen der intumeszierende Brandschutzlack angeordnet ist. In Vertiefungen der Verbindungselemente eingebracht ist der Brandschutzlack gegenüber der sonstigen Oberfläche des Verbindungselements abgesenkt und damit geschützt angeordnet. Die Vertiefungen bilden damit einen konstruktiven Schutz des Brandschutzlacks gegenüber Beschädigungen insbesondere während der Lagerung und der Montage der Verbindungselemente. Auch dadurch lässt sich die Qualität des Brandschutzes verbessern.

Nach einer weiteren vorteilhaften Ausgestaltung der Erfindung kann der intumeszierende Brandschutzlack eine Schichtdicke von mindestens 10 µm, vorzugsweise von mindestens 20 µm aufweisen. Diese Schichtdicke ist einerseits durch herkömmliche Applikationsverfahren ohne Weiteres zu erreichen und stellt andererseits eine zuverlässige Wirkung des Brandschutzlacks sicher.

Die eingangs genannte Aufgabe wird außerdem durch eine Innenverkleidungsplatte mit mindestens zwei stabilen Deckschichten und mindestens einer zwischen den Deckschichten angeordneten leichten Zwischenschicht, also einer Stützkernverbund-, Sandwichplatte oder einem Laminatbauteil, mit Rand- oder Kantenflächen, die weitgehend orthogonal zu ihrer Erstreckungsebene ausgerichtet sind, für eine Innenverkleidung gelöst, die mit einem intumeszierenden Brandschutzlack an ihren Kantenflächen ausgestattet ist. Der erfindungsgemäße Brandschutzlack lässt sich durch Streichen, Rollen, Spritzen oder Tauchen auf einfache Weise voll-oder teilflächig aufbringen, wobei dieser Applikationsvorgang auch mechanisiert erfolgen kann. Damit sinkt die gegenüber einer händischen Montage gegebene Fehleranfälligkeit.

Die eingangs genannte Aufgabe wird außerdem durch eine intumeszierende Beschichtung für Brandschutzzwecke von Kanten von Innenverkleidungsplatten und/oder von Verbindungsmitteln an Koppelungsstellen der Innenverkleidungsplatten für eine Innenverkleidung gelöst, wobei die Beschichtung in einem im Montagezustand flüssigen und damit streich-, roll-, spritz- oder eintauchbaren Lack besteht.

Die Aufgabe der Erfindung lässt sich schließlich auch durch ein flächiges Verbindungselement zur Verbindung von Innenverkleidungsplatten an deren Koppelungsstellen für eine Innenverkleidung lösen, das mit einer intumeszierenden Beschichtung ausgestattet ist, wobei die intumeszierende Beschichtung als Lack auf dem flächigen Verbindungselement selbst aufgebracht ist. Damit kann eine Ausstattung der Innenverkleidungsplatten mit der intumeszierenden Beschichtung entfallen, was die Herstellung der Brandschutzsicherheit erleichtert.

Das Prinzip der Erfindung wird anhand der nachfolgenden Zeichnungsbeschreibung beispielshalber noch näher erläutert. In der Zeichnung zeigen:
- Figur 1:: eine erste Ausführungsform für eine Koppelungsstelle,
- Figur 2:: die Koppelungsstelle bei beginnender Brandeinwirkung,
- Figur 3:: dieselbe Koppelungsstelle bei länger andauernder Brandeinwirkung,
- Figur 4:: eine weitere Ausführungsform einer Koppelungsstelle,
- Figur 5:: eine dritte Ausführungsform einer Koppelungsstelle,
- Figur 6:: die Koppelungsstelle gemäß Figur 5 unter beginnender Hitzeeinwirkung, und
- Figur 7:: die Koppelungsstelle gemäß Figur 5 unter lang andauernder Hitzeeinwirkung.

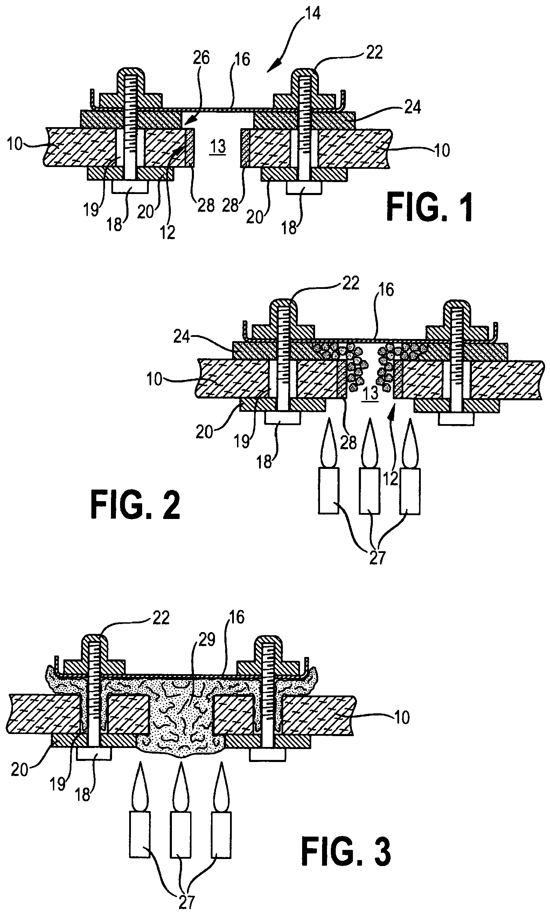

Figur 1 zeigt eine Koppelungsstelle 14 zweier Innenverkleidungsplatten 10 eines Luftfahrzeugs. Die beiden Platten 10 schließen mit ihren beiden einander zugewandten und parallel zueinander verlaufenden Kanten 12 einen Zwischenraum 13 ein, den ein Verbindungsblech als Verbindungselement 16 überbrückt. Die beiden Platten 10 sind nicht unmittelbar miteinander gekoppelt, sondern indirekt über das Verbindungselement 16 und eine Schraube 18 und eine Mutter 22 als Befestigungsmittel aneinander befestigt. Die Schraube 18 durchgreift einen zylindrischen Durchbruch 19 in der Platte 10, der ein Mehrfaches des Durchmessers der Schraube 18 aufweist. Von einer Schraubenkopfseite aus deckt eine Unterlegscheibe 20 den Durchbruch 19 ab. Der Unterlegscheibe 20 bezüglich der Platte 10 gegenüber und in einem Spalt 26 zwischen der Platte 10 und dem Verbindungselement 16 ist ein Dichtband 24 angeordnet. Auf dem Dichtband 24 liegt das Verbindungselement 16 auf, das mit der Mutter 22 und mit der Schraube 18 befestigt ist. Der gegenüber dem Schaftdurchmesser der Schraube 18 größere Durchmesser des Durchbruchs 19 ermöglicht ein gewisses Spiel zwischen den beiden Platten 10.

An den beiden einander zugewandten Kanten 12 trägt jede Platte 10 einen vollflächigen, also die Fläche der Kanten 12 vollständig bedeckenden Lack 28. Er ragt in den Zwischenraum 13 zwischen den beiden Platten 10 hinein und befindet sich damit in unmittelbarer Nähe der beiden Dichtbänder 24 bzw. des Spalts 26. Der Lack 28 stellt zugleich eine Kantenversiegelung der Platten 10 dar, da sie die Flächen der Kanten 12 vollständig bedecken. Der Lack 28 hat eine Schichtdicke von 12 µm und ist durch Abrollen einer Farbrolle auf den Flächen der Kanten 12 aufgebracht.

Figur 2 zeigt die Wirkungsweise des Lacks bei einer beginnenden Hitzeeinwirkung einer Hitzequelle 27, insbesondere durch Feuer: die Hitzeeinwirkung zersetzt das nicht temperaturbeständige Dichtband 24 fortschreitend vom Zwischenraum 13 aus. Der Lack 28 ist jedoch in einer direkten Wirkungsrichtung davor angeordnet, so dass er der Hitzeeinwirkung zumindest gleichzeitig ausgesetzt ist. Ab einer Schwelltemperatur von 200°C beginnt der Lack 28 durch chemische Reaktion aufzuschäumen und ein Vielfaches seines Volumens anzunehmen. Er dehnt sich in die sich ihm bietenden Freiräume aus, füllt daher zunächst den Zwischenraum 13, je nach fortschreitender Zerstörung des Dichtbands 24 den Spalt 26 und schließlich den Durchbruch 19 (vgl. Figur 3) aus und bildet einen Barriereschaum 29. Bei unverminderter Stabilität der Koppelungsstelle 14 ist schließlich jeder denkbare Zwischenraum zwischen den Kanten 12 der Platten 10 untereinander und gegenüber dem Verbindungselement 16 sowie die Durchbrüche 19 in den Platten 10 mit dem Barriereschaum 29 ausgefüllt. Damit kann kein Gas durch die Koppelungsstelle 14 hindurch dringen, sie bleibt also dicht. Auch einer Hitzeausbreitung wird auf diese Weise weitgehend vorgebeugt.

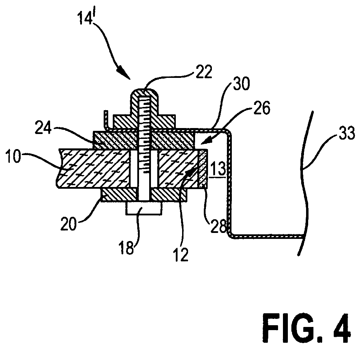

Figur 4 zeigt eine weitere Ausgestaltungsform einer Koppelungsstelle 14', an der eine Platte 10 an einer Sekundärstruktur 33 festgelegt ist. Dazu ist die Platte 10 mit den Befestigungsmitteln 18, 22 und im Übrigen in der in Figur 1 beschriebenen Weise an einem gekröpften Verbindungselement 30 befestigt. Der Kante 12 der Platte 10 liegt folglich im Bereich eines Zwischenraums 13 das Verbindungselement 30 gegenüber. Der wie in Figur 1 an der Platte 10 an der Kante 12 angebrachte Lack 28 kann folglich in der bereits beschriebenen Art und Weise bei einer Hitzeeinwirkung den Zwischenraum 13, den Spalt 26 und ggf. den Durchbruch 19 dichtend ausfüllen. Anstelle des Verbindungselements 30 kann auch ein Bestandteil einer Träger- bzw. Sekundärstruktur selbst mit der Platte 10 verbunden sein.

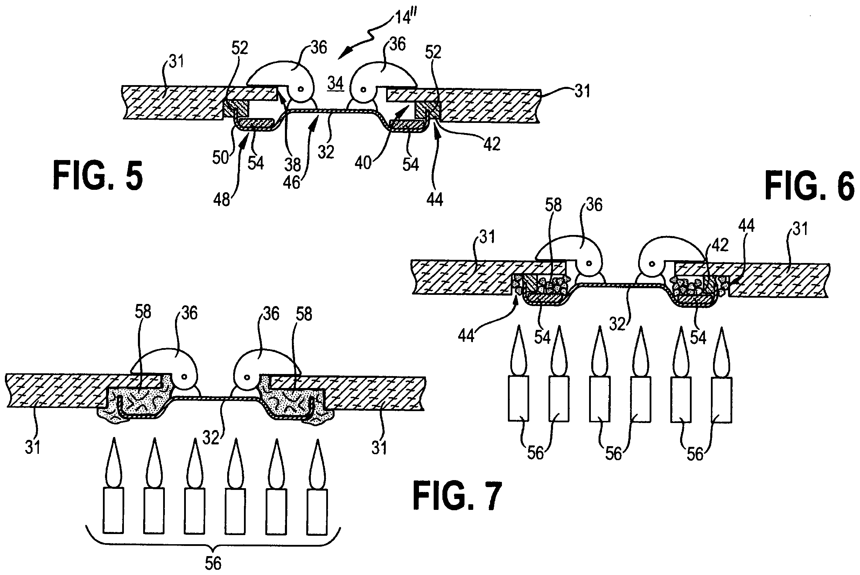

Figur 5 zeigt eine dritte Ausführungsform einer Koppelungsstelle 14", an der zwei Platten 31 über ein Verbindungselement 32 indirekt gekoppelt sind. Wie in den Figuren 1 bis 3 überbrückt das Verbindungselement 32 einen Zwischenraum 34 zwischen den Platten 31, ist jetzt aber abweichend davon von einer Ansichtsseite aus montiert. Ein weiterer Unterschied besteht darin, dass Befestigungselemente 36 von einer Ansichtsseite aus nicht sichtbar sind. Denn sie sind als Exzenterhebel ausgebildet, die schwenkbar an dem Verbindungselement 32 gelagert sind, und zwar in einer exzentrischen Lagerung. In der montierten Stellung sind die Hebel 36 geringfügig über einen Druckpunkt ausgeschwenkt und mechanisch an den Platten 31 angeschlagen. Dadurch entsteht eine Selbsthemmung, so dass sich die Befestigungselemente 36 nicht mehr von selbst öffnen und das Verbindungselement 32 zuverlässig und dauerhaft mit den Platten 31 verbinden.

Aufeinander zuweisende Kanten 38 der Platten 31 sind nicht ebenflächig und orthogonal zu einer Erstreckungsebene der Platten 31 angeordnet, sondern mit einer Stufe 40 ausgebildet. Durch die Stufe 40 entsteht in jeder Platte 31 ein Absatz, in dem ein Dichtband 42 gegen Luftdurchtritt und Feuchtigkeit eingeklebt ist. Es dichtet einen Spalt 44 zwischen den Platten 31 und dem Verbindungselement 32 ab.

Das Verbindungselement 32 ist in seiner Längsrichtung, also in einer Erstreckungsrichtung des Zwischenraums 34 zwischen den beiden Platten 31, profiliert gestaltet. An einem ebenen Mittelstreifen 46 sind die Befestigungselemente 36 angebracht. In zwei rechts und links davon außen liegenden breiten Randstreifen 48 sind Vertiefungen 50 ausgebildet, deren Niveau unter demjenigen des Mittelstreifens 46 liegt. Ränder 52 des Verbindungselements 32 sind quasi aufgeschüsselt und laufen in eine Richtung rechtwinklig zur Ebene des Mittelstreifens 46 aus. Im montierten Zustand tauchen die Ränder 52 in die Dichtstreifen 42 ein und bilden damit eine zuverlässige luft- und feuchtigkeitsdichte Verbindung gegenüber den Platten 31.

In den Vertiefungen 50 des Verbindungselements 32 ist Brandschutzlack 54 in einer Dicke von 20 µm eingelassen. Er ist damit in einem Querschnitt betrachtet auf einer Seite abgeschirmt durch den höher liegenden Mittelstreifen 46 und auf der gegenüberliegenden anderen Seite durch den ebenfalls höher liegenden Rand 52 des Verbindungselements 32. Lediglich an den Stirnseiten liegt er in einer Richtung der Längserstreckung des Verbindungselements 32 frei. Im Übrigen aber ist er insbesondere bei der Montage des Verbindungselements 32 durch seine vertiefte Lage darin gegen versehentliche Beschädigungen geschützt.

Figur 6 verdeutlicht die Wirkungsweise des Brandschutzlacks 54 bei Hitze infolge von Flammeinwirkung 56: ab einer Schwelltemperatur von beispielsweise 200°C schäumt der Lack 54 auf und bläht sich auf ein Vielfaches seines Ursprungsvolumens zu einem Barriereschaum 58 auf (siehe Figur 7). Dabei füllt er den Hohlraum in seiner unmittelbaren Nähe vollständig aus, insbesondere den Spalt 44 zwischen dem Verbindungselement 32 und den Platten 31. Bei fortschreitender Zerstörung des Dichtbands 42 ersetzt er auch dessen Funktion, indem er den ursprünglich durch das Dichtband 42 eingenommenen Raum vollständig ausfüllt. Diesen Zustand zeigt Figur 7, in dem der Brandschutzlack 54 vollständig in den Barriereschaum 58 umgewandelt ist.

**Bezugszeichenliste:**

| | | | |
|---|---|---|---|
| 10 | Platte | 32 | Verbindungselement |
| 12 | Kante | 33 | Sekundärstruktur |
| 13 | Zwischenraum | 34 | Zwischenraum |
| 14, 14', 14" | Koppelungsstellen | 36 | Befestigungselement |
| 16 | Verbindungselement | 38 | Kante |
| 18 | Schraube | 40 | Stufe |
| 19 | Durchbruch | 42 | Dichtband |
| 20 | Unterlegscheibe | 44 | Spalt |
| 22 | Mutter | 46 | Mittelstreifen |
| 24 | Dichtband | 48 | Randstreifen |
| 26 | Spalt | 50 | Vertiefung |
| 27 | Hitzequelle | 52 | Rand |
| 28 | Lack | 54 | Lack |
| 29 | Barriereschaum | 56 | Flammeinwirkung |
| 30 | Verbindungselement | 58 | Barriereschaum |
| 31 | Platte | | |

## Patentansprüche

1. Innenverkleidung von Personen- und Gütertransportmitteln, insbesondere von Luftfahrzeugen, mit Innenverkleidungsplatten (10; 31), insbesondere aus faserverstärkten Kunststoffen, mit umlaufenden Kanten (12; 38), mit Koppelungsstellen (14) an den Kanten (12; 38) der Innenverkleidungsplatten (10; 31) untereinander oder an einer Sekundärstruktur, mit flächigen Verbindungselementen (16; 30; 32) an den Koppelungsstellen (14), mit Befestigungselementen (18; 22; 36) zur Befestigung der Verbindungselemente (16; 30; 32) zumindest an den Innenverkleidungsplatten (10; 31) und mit einem Dichtmittel (24; 42) in einem Spalt (26; 44) zwischen der Innenverkleidungsplatte (10; 31) und dem Verbindungselement (16; 30; 32), aufweisend einen Lack (28; 54) als intumeszierende Beschichtung, wobei das Dichtmittel (24; 42) eine von dem Lack getrennte Luft- und Feuchtigkeitsdichtung ist; **dadurch gekennzeichnet, dass** der intumeszierende Lack (28; 54) an den Kanten der Innenverkleidungsplatten (10; 31) angebracht ist.

2. Innenverkleidung nach Anspruch 1, **gekennzeichnet durch** eine Beschichtungsbreite des intumeszierenden Lacks (28) entsprechend der Kantenbreite orthogonal zur Erstreckungsebene der Innenverkleidungsplatte (10).

3. Innenverkleidung nach einem der obigen Ansprüche, **dadurch gekennzeichnet, dass** der intumeszierende Lack (28) zugleich eine Kantenversiegelung der Kanten (12) der Innenverkleidungsplatten (10) darstellt.

4. Innenverkleidung nach einem der obigen Ansprüche, **dadurch gekennzeichnet, dass** der intumeszierende Lack (54) ausschließlich oder zusätzlich an den Verbindungselementen (32) angebracht ist.

5. Innenverkleidung nach Anspruch 4, **gekennzeichnet durch** eine Profilierung (46, 48) des Verbindungselements (32) mit Vertiefungen (50), in denen der intumeszierende Lack (54) angeordnet ist.

6. Innenverkleidung nach einem der obigen Ansprüche, **gekennzeichnet durch** eine Schichtdicke des intumeszierenden Lacks (28; 54) von mindestens 10 µm.

## Claims

1. Interior lining of a means of transporting people and goods, in particular of aircraft, with interior lining panels (10; 31), in particular of fiber-reinforced plastics, with peripheral edges (12; 38), with coupling points (14) at the edges (12; 38) of the interior lining panels (10; 31) to one another or to a secondary structure, with flat connecting elements (16; 30; 32) at the coupling points (14), with fastening elements (18; 22; 36) for fastening the connecting elements (16; 30; 32) at least on the interior lining panels (10; 31) and with a sealing means (24; 42) in a gap (26; 44) between the interior lining panel (10; 31) and the connecting element (16; 30; 32), comprising a lacquer (28; 54) as an intumescent coating, wherein the sealing means (24; 42) is an air and moisture seal separate from the lacquer; **characterized in that** the intumescent lacquer (28; 54) is applied to the edges of the interior lining panels (10; 31).

2. Interior lining according to claim 1, **characterized by** a coating width of the intumescent lacquer (28) corresponding to the edge width orthogonal to the plane of extension of the interior lining panel (10).

3. Interior lining according to one of the above claims, **characterized in that** the intumescent lacquer (28) also acts as an edge sealant for the edges (12) of the interior lining panels (10).

4. Interior lining according to one of the above claims, **characterized in that** the intumescent lacquer (54) is applied exclusively or additionally to the connecting elements (32).

5. Interior lining according to claim 4, **characterized by** a profiling (46, 48) of the connecting element (32) with recesses (50) in which the intumescent lacquer (54) is arranged.

6. Interior lining according to one of the above claims, **characterized by** a layer thickness of the intumescent lacquer (28; 54) of at least 10 µm.

## Revendications

1. Revêtement intérieur de moyens de transport de personnes et de marchandises, en particulier d'avions, avec des panneaux de revêtement intérieur (10; 31), en particulier en matière plastique renforcée de fibres, avec des bords périphériques (12; 38), avec des points d'accouplement (14) sur les bords (12; 38) des panneaux de revêtement intérieur (10; 31) entre eux ou avec une structure secondaire, avec des éléments de liaison plats (16; 30; 32) sur les points d'accouplement (14), avec des éléments de fixation (18; 22; 36) pour la fixation des éléments de liaison (16; 30; 32) au moins sur les panneaux de revêtement intérieur (10; 31) et avec un moyen d'étanchéité (24; 42) dans un espace (26; 44) entre le panneau de revêtement intérieur (10; 31) et l'élément de liaison (16; 30; 32), comprenant une laque (28; 54) comme revêtement intumescent, dans lequel le moyen d'étanchéité (24; 42) est un joint d'étanchéité à l'air et à l'humidité séparé de la laque; **caractérisé en ce que** la laque intumescente (28; 54) est appliquée sur les bords des panneaux de revêtement intérieur (10; 31).

2. Revêtement intérieur selon la revendication 1, **caractérisé par** une largeur de revêtement de la laque intumescente (28) correspondant à la largeur de bord orthogonale au plan d'extension du panneau de revêtement intérieur (10).

3. Revêtement intérieur selon l'une des revendications ci-dessus, **caractérisé en ce que** la laque intumescente (28) agit également comme un moyen d'étanchéité pour les bords (12) des panneaux de revêtement intérieur (10).

4. Revêtement intérieur selon l'une des revendications ci-dessus, **caractérisé en ce que** la laque intumescente (54) est appliquée exclusivement ou en complément des éléments de liaison (32).

5. Revêtement intérieur selon la revendication 4, **caractérisé par** un profilage (46, 48) de l'élément de liaison (32) avec des évidements (50) dans lesquels est disposée la laque intumescente (54).

6. Revêtement intérieur selon l'une des revendications ci-dessus, **caractérisé par** une épaisseur de couche de la laque intumescente (28; 54) d'au moins 10 µm.
